# EUROPEAN PATENT APPLICATION

(11) **EP 4 654 419 A1**
(43) Date of publication of application: **26.11.2025**
(21) Application number: 25161257.8
(22) Date of filing: 03.03.2025
(51) Int. Cl.: H02J 3/38, H02S 10/10, H02S 10/12, H02S 40/32

(54) **DEVICE FOR CONNECTING THE RENEWABLE ENERGY SOURCE TO THE DISTRIBUTION ELECTRIC GRID BY MEANS OF THE PHOTOVOLTAIC INVERTER WITH MPPT INPUT, POWER SYSTEM AND CONNECTION METHOD**

(30) Priority: 21.05.2024 SK 500312024
(71) Applicant: EV-GP a.s., 903 01 Senec (SK)
(72) Inventor: Száraz, Július, 903 01 Senec (SK)
(74) Representative: inventa Patentova a znamkova kancelaria s.r.o.

(57) **Abstract**

There is described the device for connecting the renewable energy source to the distribution electric grid by means of the photovoltaic inverter with at least one MPPT input, comprising an MPPT controller (1) having the DC input (15) for connecting the at least one renewable energy source (12), wherein the output of the above mentioned MPPT controller (1) is connected to the DC simulator (3) of the photovoltaic panel having the output (6) for connecting to the photovoltaic inverter with at least one MPPT input, wherein this device (10) further comprises the control unit (4) connected on both sides to the MPPT controller (1) and the DC photovoltaic panel simulator (3), and wherein this control unit (4) has the input (7) for controlling the above mentioned device (10), and wherein the MPPT controller (1) is arranged to optimize the current and the voltage at its input to achieve the maximum power output from the connected renewable energy source (12). There is also described the method of connecting of the renewable energy source to the distribution electric grid.

## Description

### Technical field

The invention relates to the device for connecting the renewable energy source to the distribution electric grid by means of the photovoltaic inverter with at least one MPPT input, the power system and the method for connection without the need to use the special connection electronic device and the inverters, with use in all fields of renewable energy sources, where, in addition to the photovoltaic panels also the wind and hydraulic turbines, hydrogen fuel cells, hydrogen generators for households, industry, manufacturing plants, business centres, residential buildings, power generation and other buildings with or without electricity connection are planned. The invention falls within the field of power engineering.

### Background

The renewable energy sources such as solar, wind and hydro power are increasingly being used to generate electricity. These sources are often connected to the electric grid to supply power when the renewable source produces more electricity than is consumed.

It is known from the state of the art that separate technological units are used to generate electricity from renewable energy sources - wind and hydraulic power plants, hydrogen fuel cells and hydrogen generators, each such source is equipped with separate AC GRID output devices and these can be connected at the AC GRID grid voltage level, which largely limits and makes it more expensive to combine these renewable energy sources.

However, connection of these sources to the grid can be difficult due to the different electrical characteristics of different renewable energy sources. For example, the electrical power of the solar panel differs from power of the wind turbine or hydroelectric generator. This variability can make it difficult to connect these sources to the grid using standard equipment. In addition, there are strict certification requirements for the devices used for connection of renewable energy sources to the grid, which can further complicate the process.

The combination of wind, hydro, solar and hydrogen energy is an important technological need for more stable and efficient sources of electric energy, up to energy independence. The connection of photovoltaic panels is currently covered by a wide range of approved photovoltaic inverters with MPPT (Maximum Power Point Tracking) inputs ranging from 1 to 16 or more photovoltaic panels, therefore the implementation of photovoltaic panels in the distribution grid (AC GRID) is relatively easy and relatively inexpensive. Due to the fact that the connection of renewable energy sources is approved by the grid operator and requires the connection of only approved "photovoltaic" or "wind" inverters respectively "hydrogen" inverters and generators, the connection of photovoltaic power plants with wind and hydraulic power plants and hydrogen generators is economically too costly, because for each country these plants must be separately certified.

Currently, the options for certified converters to connect other renewable energy sources other than photovoltaic panels to the grid are severely limited, which limits the types of renewable energy sources that can be connected to the grid.

In the state of the art, a grid-connected renewable energy conversion device is known, as described in EP 2541721 A2, wherein the device comprises: one or more DC/DC converters connected to one or more renewable energy sources; the intermediate circuit unit whose voltage value is determined by the sum of the output currents from the one or more DC/DC converters; and the inverter unit that determines a current setpoint from the voltage value of the DC intermediate circuit unit and generates an AC voltage according to the current setpoint.

### Summary of invention

In the effort to simplify and make relatively cheaper the connection of renewable energy sources and photovoltaic panels to the AC GRID grid voltage with approved photovoltaic inverters with MPPT inputs, the device for connecting the renewable energy source to the distribution electric grid by means of the photovoltaic inverter with at least one MPPT input according to the invention has been proposed, the essence of which is that the device comprises MPPT controller, which is arranged to optimize the current and voltage at its input to achieve the maximum output from the connected renewable energy source. MPPT controller has the AC input and/or the DC input for connecting at least one renewable energy source.

The output of this MPPT controller is connected to the DC photovoltaic panel simulator, which has the output to connect to the photovoltaic inverter with at least one MPPT input. This device further comprises the control unit connected on both sides to MPPT controller and DC photovoltaic panel simulator, wherein this control unit has the input for controlling the above-mentioned device. The control unit has input means for defining the operating parameters.

The device is configured to modify the energy characteristics of the renewable energy source in such a way that it can be integrated into the existing energy infrastructure and use the already certified connectivity of photovoltaic power plants.

This arrangement of the device at the same time allows easy integration of the renewable energy source into existing photovoltaic systems and thus the possibility of achieving a high degree of energy independence by means of the use of different renewable energy sources.

AC/DC power inverter and MPPT controller transform energy from renewable energy source, which makes it compatible with DC photovoltaic panel simulator. The DC photovoltaic panel simulator simulates the energy source of the photovoltaic panel, allowing it to be easily integrated with existing solar energy infrastructure. It is possible for the MPPT controller to be connected on both sides to the electrical energy storage, which makes it possible to minimize the impact of short-term outages on the stability of the output of the DC photovoltaic panel simulator.

The storage of electric energy can preferably be the battery, allowing also the overlapping of longer outages, or the capacitor, allowing more compact arrangement of the whole device, or other devices for the storage of electric energy.

It is advantageous for some implementations that the above-mentioned device comprises the safety module to which the AC input and/or the DC input from at least one renewable energy source and the control unit are connected. The control unit monitors the prescribed limit values and, if these values are exceeded, it switches on the safety module, which provides instructions to return to the default mode. For example, it will ensure that the load is connected to the electric generator of the wind turbine in the event of excessive speed of the wind acting on the blades of the wind turbine.

The renewable energy sources with AC or DC energy output can be connected to the device. If the renewable energy source has the AC output, then it is connected to the AC input of the MPPT controller through the AC/DC inverter. If the renewable energy source has the DC output, then the DC input of the MPPT controller is connected directly to the source.

In another aspect, the invention also provides the power system with the renewable energy sources connected to the distribution electric grid by means of the photovoltaic inverter having at least one MPPT input, the power system comprising at least one renewable energy source and the device for connection of the renewable energy source to the distribution electric grid by means of the photovoltaic inverter having at least one MPPT input in such a manner, wherein the at least one AC input of the MPPT controller of the device is connected to the at least one renewable energy source, and the output for connecting to the photovoltaic inverter with the at least one MPPT input of the photovoltaic panel simulator of the device is connected to one of the MPPT inputs of the photovoltaic inverter with the multiple inputs of MPPT. In doing so, the photovoltaic panels are connected to other MPPT inputs of the photovoltaic inverter with multiple MPPT inputs, which has output to the AC GRID power distribution grid. The MPPT PV inverter is capable to operate in ON GRID mode or in HYBRID and OFF GRID mode, to which the separate battery electric energy storage can be directly connected. The photovoltaic inverters with at least one MPPT input may, in unlimited numbers, be connected with their separate AC GRID interconnection to the AC GRID LV SWITCHGEAR, where these photovoltaic inverters - their AC GRID outputs are connected through the corresponding electrical elements to one bus of the AC GRID LV switchgear of the AC GRID LV SWITCHGEAR. AC GRID LV SWITCHGEAR is then connected to the AC GRID LV distribution network. It is possible for the AC GRID LV SWITCHGEAR to be connected through the AC GRID LV output to the LV/HV transformer whose AC GRID HV output is to be connected to the AC GRID HV distribution grid. It is also advantageous for the AC GRID LV SWITCHGEAR to be connected through the AC GRID LV output to its own battery storage.

In the device for connection of the renewable energy source to the electricity distribution network by means of the photovoltaic inverter MPPT contained in the power system, the method is applied in which the MPPT controller optimizes the current and voltage at its input to achieve the maximum power from the connected renewable energy source using the Maximum Power Point Tracking (MPPT) technique. The use of the MPPT technique is well known to a person skilled in the art and widely documented in the literature, and its principle is described, for example, on the Wikipedia website https://en.wikipedia.org/wiki/Maximum_power_point_tracking.

The advantages of the device for connecting the renewable energy source to the distribution electric grid by means of the photovoltaic inverter with at least one MPPT input, the power system with the device applied, and the method of connection of the device according to the invention are evident from its effects by which it is demonstrated externally. The effects of the device consist, among others, in providing the possibility of easily combining different renewable energy sources and connecting them by means of the photovoltaic inverter with multiple MPPT inputs, as well as in optimising the energy obtained from the renewable energy source connected by means of the photovoltaic inverter with at least one MPPT input. Maximum Power Point Tracking (MPPT) technique is used to optimize the input current and voltage parameters to maximize the power obtained from the renewable energy source. The connection itself can be made with standard certified devices, facilitating the connection of essentially any renewable energy source to the distribution electric grid at reduced financial cost and without the need to obtain additional certifications.

### Brief drawings description

The connection for connecting the renewable energy source to the distribution electric grid by means of the photovoltaic inverter MPPT according to the invention will be further explained in the drawings, in which:
Fig. 1 shows the circuit for connecting the renewable energy source to the distribution electric grid by means of the photovoltaic inverter with at least one MPPT input in the block diagram.
Fig. 2 shows the power system with renewable energy sources connected to the distribution electric grid by means of the MPPT photovoltaic inverter.

### Examples of embodiment

It is understood that the various embodiments of the invention are presented by way of illustration and not as limitations of the solutions.

### Example 1

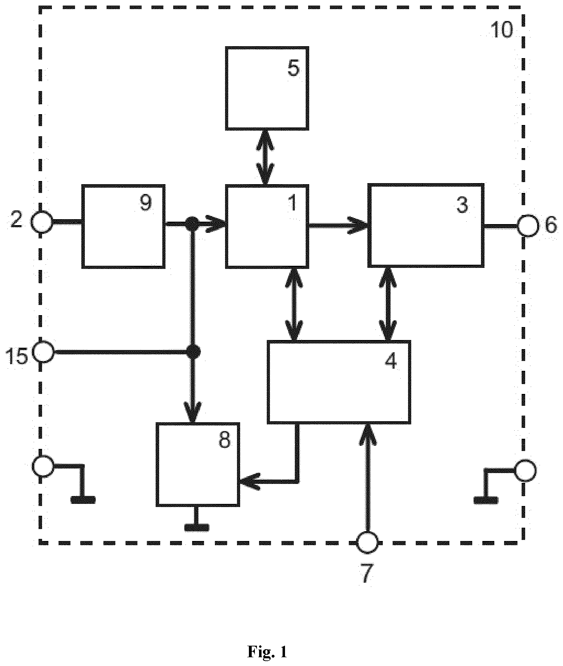

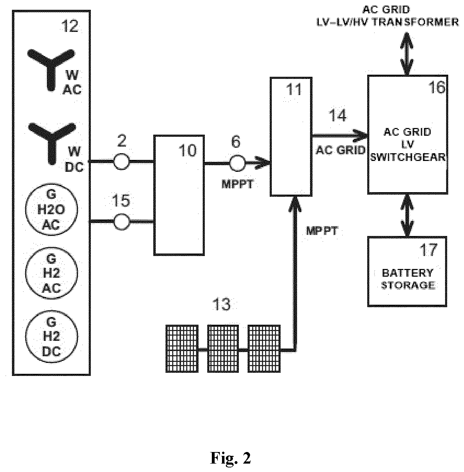

In this example of the specific embodiment, there is described the device for connecting the renewable energy source - wind power plant to the AC GRID distribution electric grid by means of the photovoltaic inverter with at least one MPPT input according to the invention as shown in FIGS. 1 and 2.

Alternatively, another renewable energy source can be used.

The device includes the MPPT controller 1. The MPPT controller 1 has the AC input 2 for connecting the renewable energy source 12 - wind power plant through the AC/DC inverter 9.

Alternatively, the MPPT controller 1 has the DC input 15 for direct DC connecting of at least one renewable energy source 12 with a DC energy output.

The output of this MPPT controller 1 is connected to the DC photovoltaic panel simulator 3 having the output 6 for connection to the photovoltaic inverter with at least one MPPT input. The device further comprises the control unit 4 connected on both sides to the MPPT controller 1 and to the DC photovoltaic panel simulator 3.

The control unit 4 has the input 7 for controlling the above mentioned device 10. Possibly, the MPPT controller 1 has been connected on both sides to the electrical energy storage 5, in this case preferably to the battery. Alternatively, the electrical energy storage 5 is the capacitor.

The device 10 comprises the safety module 8, to which is connected the AC input 2, and optionally also the DC input 15 from the renewable energy source 12 - the wind power plant, and to which is also connected the control unit 4.

### Example 2

In this example of the specific embodiment, the power system with renewable energy sources to the distribution electric grid by means of the photovoltaic inverter with at least one MPPT input according to the invention as shown in FIG. 2 is described. The power system comprises the photovoltaic inverter 11 with multiple MPPT inputs and the device 10 for connecting the renewable energy source to the distribution electric grid by means of the photovoltaic inverter with at least one MPPT input of Example 1, wherein the AC input 2 and alternatively the DC input 15 of the MPPT controller 1, is connected to the renewable energy source 12, and the output 6 for connection to the photovoltaic inverter with at least one MPPT input of the DC photovoltaic panel simulator 3 is connected to one of the MPPT inputs of the photovoltaic inverter 11 with the multiple MPPT inputs. In doing so, the photovoltaic panels 13 are connected to another MPPT inputs of the photovoltaic inverter 11 with multiple MPPT inputs. The photovoltaic inverter 11 with multiple MPPT inputs has the output 14 to the distribution electric grid.

### Example 3

In this example of the specific embodiment, there is described the method of connecting of the renewable energy source 12 to the distribution electric grid by means of the device 10 according to the present invention, wherein the MPPT controller 1 optimizes the current and voltage at its input to achieve the maximum power from the connected renewable energy source 12 using the Maximum Power Point Tracking technique.

### Industrial applicability

The device for connecting the renewable energy source to the distribution electric grid by means of the photovoltaic inverter MPPT is applicable in all renewable energy installations by connecting the renewable energy generators connected with the output to the existing installation to the free MPPT inputs of the photovoltaic inverters, alternatively, by adding new approved photovoltaic inverters to the existing installation for wind power plants, hydro power plants, hydrogen fuel cells and hydrogen generators for electricity generation, or to the new designed installation in different numbers according to the needs of the customers.

### List of the reference numerals

- 1: MPPT controller
- 2: AC input
- 3: DC photovoltaic panel simulator
- 4: control unit
- 5: storage of the electric energy
- 6: output for connection to the photovoltaic inverter with at least one MPPT input
- 7: input for control
- 8: safety module
- 9: AC/DC inverter
- 10: device for connecting the renewable energy source to the distribution electric grid by means of the photovoltaic inverter with at least one MPPT input
- 11: photovoltaic inverter with at least one MPPT input
- 12: renewable energy source
- 13: photovoltaic panel
- 14: output to the distribution electric grid
- 15: DC input
- 16: AC Grid LV switchgear
- 17: battery storage for AC Grid LV switchgear

## Claims

1. A device for connecting the renewable energy source to a distribution electric grid by means of a photovoltaic inverter with at least one MPPT input, **characterized in that** it comprises a MPPT controller (1) having a DC input (15) for connecting the at least one renewable energy source (12), wherein an output of the above mentioned MPPT controller (1) is connected to a DC simulator (3) of the photovoltaic panel having an output (6) for connecting to the said photovoltaic inverter with at least one MPPT input, wherein the said device (10) further comprises a control unit (4) connected on both sides to both the said MPPT controller (1) and the said DC photovoltaic panel simulator (3), and wherein the said control unit (4) has an input (7) for controlling the said device (10), and wherein the said MPPT controller (1) is arranged to optimize the current and the voltage at its input to achieve the maximum power output from the said connected renewable energy source (12).

2. The device for connecting the renewable energy source to the distribution electric grid by means of the photovoltaic inverter with at least one MPPT input according to claim 1, **characterized in that** the said MPPT controller (1) is connected on both sides to an electrical energy storage (5).

3. The device for connecting the renewable energy source to the distribution electric grid by means of the photovoltaic inverter with at least one MPPT input according to claim 2, **characterized in that** the said electrical energy storage (5) is a battery.

4. The device for connecting the renewable energy source to the distribution electric grid by means of the photovoltaic inverter with at least one MPPT input according to any one of the preceding claims, **characterized in that** it comprises a safety module (8) to which is connected a DC input (15) from the at least one renewable energy source (12) and the control unit (4).

5. The device for connecting the renewable energy source to the distribution electric grid by means of the photovoltaic inverter having at least one MPPT input according to any one of claims 1 to 4, **characterized in that** it comprises an AC/DC inverter (9) having an AC input (2) for connecting the said at least one renewable energy source (12), wherein the output of the said AD/DC converter is connected to the said DC input (15) of the said MPPT controller (1).

6. A power system with renewable energy sources connected to the distribution electric grid by means of the said photovoltaic inverter with at least one MPPT input, **characterized in that** it comprises a photovoltaic inverter (11) with multiple MPPT inputs and the device (10) for connecting the renewable energy source (12) to the distribution electric grid by means of the photovoltaic inverter with at least one MPPT input, according to any one of the preceding claims, wherein the said at least one DC input (15) of the said MPPT controller (1) of the said device (10) is connected to the said at least one renewable energy source (12) directly or by means of the said AC/DC inverter (9) and its said AC input (2), and the said output (6) for connection to the photovoltaic inverter with at least one MPPT input (11) of the said DC photovoltaic panel simulator (3) of the device (10) is connected to one of the MPPT inputs of the said photovoltaic inverter (11) with multiple MPPT inputs, and wherein the at least one photovoltaic panel (13) is connected to another MPPT input of the said photovoltaic inverter (11) with multiple MPPT inputs, wherein the photovoltaic inverter (11) with multiple MPPT inputs has the output (14) to the distribution electric grid.

7. A method for connecting the renewable energy source to the distribution electric grid by means of the device for connecting the renewable energy source to the distribution electric grid by means of the photovoltaic inverter having at least one MPPT input according to any one of the preceding claims 1 to 5, comprising the following steps:
a) connecting at least one renewable energy source (12) to at the least one DC input (15) of the MPPT controller (1) directly or by means of the AC/DC inverter (9) and its AC input (2);
b) optimizing the current and voltage at the DC input (15) of the MPPT controller (1) to achieve maximum power from the connected renewable energy source (12) using the Maximum Power Point Tracking technique.
